(19)

Europäisches
Patentamt
European
Patent Office
Office européen
des brevets

(11) **EP 2 065 888 A1**

(12) **EUROPEAN PATENT APPLICATION**

(43) Date of publication:
**03.06.2009 Bulletin 2009/23**

(51) Int Cl.:
**G11B 5/60** (2006.01)

(21) Application number: **08018003.7**

(22) Date of filing: **14.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.11.2007 JP 2007311733**

(71) Applicant: **Hitachi Global Storage Technologies Netherlands B.V.**
**1076 AZ  Amsterdam (NL)**

(72) Inventors:
• **Akagi, Kyo**
  **Fuchu-shi,**
  **Tokyo, 183-0057 (JP)**
• **Ishiwata, Kensuke**
  **Yokohama-shi,**
  **Kanagawa, 247-0009 (JP)**

• **Kouno, Takashi**
  **Kasumigaura-shi,**
  **Ibaraki, 315-0052 (JP)**
• **Takeichi, Atsushi**
  **Sagamihara-shi,**
  **Kanagawa, 228-0818 (JP)**
• **Kuroki, Kenji**
  **Fujisawa-shi,**
  **Kanagawa, 252-0814 (JP)**
• **Iwaisako, Toshihiko**
  **Fujisawa-shi,**
  **Kanagawa, 251-0861 (JP)**

(74) Representative: **Kirschner, Klaus Dieter et al**
  **Puschmann & Borchert**
  **Partnerschaft**
  **Postfach 10 12 31**
  **80086 München (DE)**

(54)  **Disk drive device and clearence control method thereof**

(57)    To more precisely control the clearance between a head and disk for the pressure without using a barometric sensor. In an embodiment of the present invention, an HDD determines a clearance from variations in operational parameters, and further determines a variation in pressure by deducting the clearance variation caused by a variation in temperature from the clearance. When the HDD controls the clearance in accordance with the pressure change, the HDD checks for head-disk contact. The accuracy and reliability in pressure measurement (clearance measurement) using operational parameters are not high. Therefore, confirming the pressure measurement by the presence or absence of head-disk contact eliminates head-disk contact in the following read/write operation to attain a securer margin for the clearance.

EP 2 065 888 A1

**Description**

The present invention relates to a disk drive device and a clearance control method therefor, more particularly, to a clearance control technique suitable for a disk drive device without a barometric sensor.

Disk drive devices using various kinds of disks, such as optical disks, magneto-optical disks, flexible magnetic disks, and the like have been known in the art. In particular, hard disk drives (HDDs) have been widely used as storage devices of computers and have been one of indispensable storage devices for current computer systems. Moreover, the HDDs have found widespread application to moving image recording/reproducing apparatuses, car navigation systems, cellular phones, and the like, in addition to the computers, due to their outstanding characteristics.

A magnetic disk used in an HDD has multiple concentric data tracks and servo tracks. Each servo track is constituted by a plurality of servo data containing address information. Each data track includes multiple data sectors containing user data. Data sectors are recorded between servo data located discretely in the circumferential direction. A head element portion of a head slider supported by a swing actuator accesses a desired data sector in accordance with address information in the servo data to write data to and retrieve data from the data sector.

In order to increase recording density of a magnetic disk, it is important to decrease the clearance (fly-height) between the head element portion flying over the magnetic disk and the magnetic disk, and to decrease the variation of the clearance; some mechanisms have been proposed to control the clearance. One of such mechanisms has a heater in a head slider; the heater heats the head element portion to adjust the clearance (for example, refer to the Japanese Unexamined Patent Application Publication No. 2006-190454 listed below). In the present specification, it is called thermal fly-height control (TFC). The TFC generates heat by applying electric current to the heater to make the head element portion protrude by thermal expansion. This reduces the clearance between the magnetic disk and the head element portion. Another mechanism has been known that uses a piezo element to adjust the clearance between the magnetic disk and the head element portion.

The clearance varies with change in barometric pressure (altitude) as well as change in temperature (for example, refer to the Japanese Unexamined Patent Application Publication No. 2006-92709 listed below). If the clearance preset value in a read/write operation is 5 nm or more, the clearance variation caused by altitude change can be absorbed by a clearance margin. However, if the clearance is not more than 2 or 3 mm in a read/write operation, clearance control for pressure change in addition to temperature change is demanded.

Typical TFC makes a head element portion protrude due to thermal expansion by increasing heater power in response to a decrease in temperature to compensate for the increase in clearance caused by the decrease in temperature. In contrast, as the altitude gets higher and the barometric pressure (hereinafter, referred to as pressure) becomes lower, the fly-height of a slider lowers. The lowered pressure reduces the clearance between the head element portion and the magnetic disk. Therefore, if the temperature is constant, the TFC decreases the protruding amount with decrease in pressure.

An HDD has a number of preset parameters for temperature; accurate temperature sensing is indispensable for normal operation of the HDD. Therefore, a common HDD comprises a temperature sensor as a means to sense the temperature. Similarly, a barometric sensor (altitude sensor) has been known as a means for sensing the pressure. However, use of a barometric sensor increases the number of components in the HDD and the cost of the HDD significantly as well. Since there are few parameters for the pressure to be set except for the parameters for clearance control, it is preferable to determine the pressure without using a barometric sensor.

As described above, the clearance varies with pressure. Accordingly, referring to the clearance allows measurement of a variation in pressure. Some techniques to determine the clearance have been known. A typical technique determines a clearance (a variation in clearance) from the amplitudes of read signals of a head element portion. As the clearance decreases, signal strength increases and the gain of a variable gain amplifier decreases.

Accordingly, referring to a gain of the variable gain amplifier allows determination of the signal strength and the clearance. A technique for determining a more precise clearance determines the clearance from resolving power (resolution) in frequency components of read signals. In another way, the pressure can be estimated from the current value in a spindle motor (SPM) although the result is inferior in accuracy.

For clearance control depending on the pressure without using a barometric sensor, it is necessary to determine a clearance variation by referring to operational parameters in an HDD (the gain in a variable gain amplifier, SPM current values, and the like) like the above-described method. However, the accuracy and reliability in pressure measurement using operational parameters in an HDD are not as high as the ones using a barometric sensor. Inaccurate pressure measurement leads to incorrect clearance control which may cause head-disk contact to damage a head slider or a magnetic disk, or leads to a read/write operation without a requisite clearance margin to cause a hard error (unrecoverable error) due to head-disk contact.

There is a need to more precisely control the clearance between a head and disk for the pressure without using a barometric sensor.

This is achieved according to the invention by a clearance control method in a disk drive device of claim 1 and the disk drive of claim 11. Preferred embodiments of the invention are characterized in the sub-claims.

The method of an aspect of the invention senses a temperature by a temperature sensor. It corrects a variation induced by a temperature change in a variation from a default value of an operational parameter of a disk drive device using the sensed temperature, and then determines a clearance variation by means of the corrected variation of the operational parameter. It checks for contact between a head and a disk if the clearance variation exceeds reference range. It specifies an adjustment amount for the clearance based on a result of the check for contact. This accomplishes more precise clearance adjustment depending on the pressure without using a barometric sensor.

The disk drive device according to an aspect of the invention comprises a head for accessing a disk, a moving mechanism for supporting and moving the head above the disk, an adjustment mechanism for adjusting a clearance between the head and the disk, a temperature sensor, and a controller for controlling at least the adjustment mechanism. The controller corrects a variation from a default value of an operational parameter in a disk drive device using a temperature sensed by the temperature sensor to compensate for a variation induced by a temperature change and then determines a clearance variation by means of the corrected variation of the operational parameter. Furthermore, it checks for contact between the head and the disk if the clearance variation exceeds a reference range. And then it specifies an adjustment amount for the clearance based on a result of the check for contact. This accomplishes more precise clearance adjustment depending on the pressure without using a barometric sensor.

Preferably, the operational parameter is a parameter which is determined from an amplitude of a signal read from the disk by the head. Or, the operational parameter is a parameter which is determined from a ratio of different frequency components in a signal read from the disk by the head. This accomplishes more accurate determination of clearance variation.

It is preferable that the controller control the adjustment mechanism so that the clearance at the time of the check for contact is smaller than the clearance in a default setting corresponding to the determined clearance variation. This accomplishes an appropriate clearance including a clearance margin. Furthermore, it is preferable that the controller check for contact at a given clearance adjusted by the adjustment mechanism. This accomplishes more efficient processes and prevents degradation in performance.

It is preferable that, if the controller detects contact in the check for contact, the controller control the adjustment mechanism so that a clearance is larger than the clearance in the default setting. This securely prevents contact in a following operation.

In a preferred example, if the controller detects contact in the check for contact, the controller control the adjustment mechanism so that a clearance is larger than the clearance in the default setting and the amount of increase from the default setting is the same as the amount of clearance deducted from the default setting in the check for contact. This accomplishes an appropriate clearance including a clearance margin by means of efficient process.

It is preferable that the controller change a reference range for the clearance variation for determining whether or not to check for contact based on the number of times that the clearance variation exceeds the reference range. This accomplishes appropriate operation for use environment. Preferably, the controller measures variation in the operational parameter at a plurality of times and determines whether or not the clearance variation exceeds the reference range based on the plurality of measured results. This accomplishes more accurate determination of clearance variation.

The present invention accomplishes more precise control of the clearance between a head and a disk depending on the pressure without using a barometric sensor.

Embodiments of the invention are described with reference to the drawings.

FIG. 1 is a block diagram schematically depicting an entire configuration of an HDD in the present embodiment.

FIG. 2 is a cross-sectional view schematically illustrating a configuration of a head slider having a heater for TFC in the present embodiment.

FIGS. 3 are drawings schematically illustrating the relationship between the measured results of the altitude change (variation in pressure), the check for head-disk contact, the reference range for determining the necessity of the check.

FIG. 4 is a flowchart illustrating processes of pressure measurement and check for head-disk contact in the present embodiment.

FIG. 5 is a block diagram showing logic components for measuring the pressure and checking for head-disk contact in the present embodiment.

FIG. 6 is a diagram schematically illustrating the relationship between Kgrad, the clearance, the heater power, and the pressure (altitude) in the present embodiment.

FIG. 7 is a flowchart illustrating the process of the check for head-disk contact in the present embodiment.

FIGS. 8 are drawings schematically illustrating a head slider in a normal operation, a head slider in checking for contact, and a head slider in a normal operation after a heater setting correction.

FIG. 9 is a flowchart illustrating the process of updating the reference range for determining whether or not to check for head-disk contact in the present embodiment.

Hereinafter, a preferred embodiment to which the present invention has been applied will be described. For clarity of explanation, the following description and the accompanying drawings contain omissions and simplifications as appropriate. Throughout the drawings, like components are denoted by like reference numerals, and their repetitive description is omitted for clarity of explanation if not necessary. Hereinafter, a preferred embodiment of the present invention will be described by way of example of a hard disk drive (HDD), which is an example of a disk drive device.

An HDD according to the present embodiment controls the clearance between a head element portion of an example of a head and a magnetic disk of an example of a disk by means of thermal fly-height control (TFC) of an example of a clearance control mechanism. The TFC adjusts the clearance by thermal expansion of a head element portion induced by heat from a heater in a slider. The TFC according to the present embodiment adjusts the clearance with pressure change. The HDD is equipped with a temperature sensor but no barometric sensor.

The HDD determines a clearance variation from variations in operational parameters. Moreover, it corrects the operational parameters in accordance with the temperature sensed by the temperature sensor to perform temperature compensation for the clearance variation. The HDD determines a clearance variation corresponding to a variation in pressure by deducting the clearance variation caused by the temperature change. Although environmental conditions to induce clearance variation include humidity in addition to temperature and pressure, substantial variation is induced by changes in temperature and pressure. Accordingly, the following description will be given based on an assumption that the remaining clearance variation after a temperature compensation has been induced by a pressure change.

An HDD according to the present embodiment checks for contact of a head slider to a magnetic disk (head-disk contact) when it changes heater power by the TFC for a pressure change. The accuracy and reliability in pressure measurement (clearance measurement) using operational parameters are not as high as the ones using a barometric sensor. Therefore, confirmation of the pressure measurement by checking for head-disk contact prevents head-disk contact in the following read/write operations or attains a securer margin for the clearance. Too frequent checks for head-disk contact are not preferable as it increases unnecessary operation time of the HDD. Therefore, the HDD according to the present embodiment checks for head-disk contact when the variation in pressure (clearance variation) has exceeded a predetermined threshold.

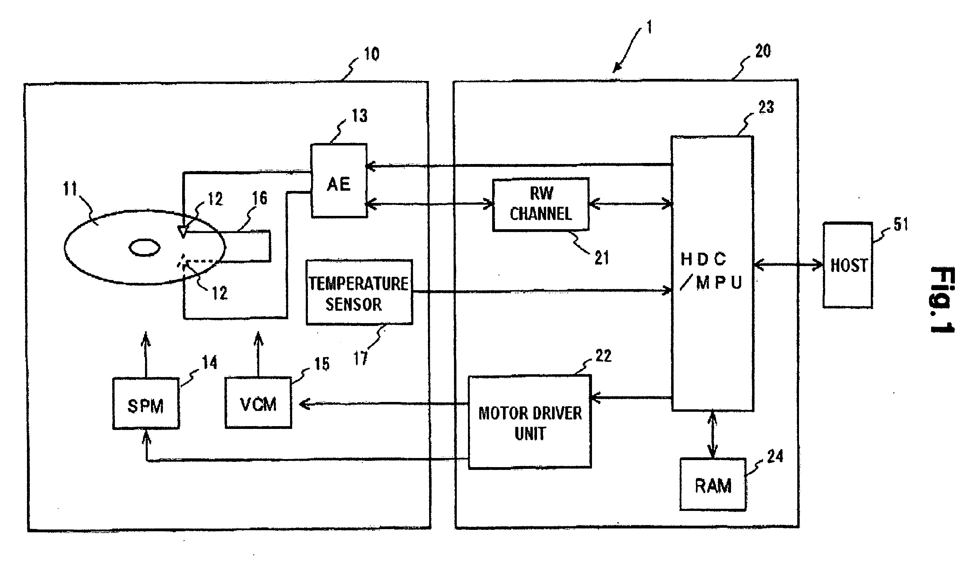

Before describing details of the TFC and the check for head-disk contact according to the present embodiment, an entire configuration of an HDD will be outlined. FIG. 1 is a block diagram schematically depicting an entire configuration of an HDD 1. The HDD 1 comprises a magnetic disk 11, a disk for storing data, inside an enclosure 10. A spindle motor (SPM) 14 rotates the magnetic disk 11 at a specific angular rate. Head sliders 12 are provided to access (read or write) the magnetic disk 11; each of them corresponds to each recording surface of the magnetic disk 11. Access is a broader concept comprising read and write. Each head slider 12 comprises a slider for flying over the magnetic disk and a head element portion fixed on a slider for converting magnetic signals to and from electric signals.

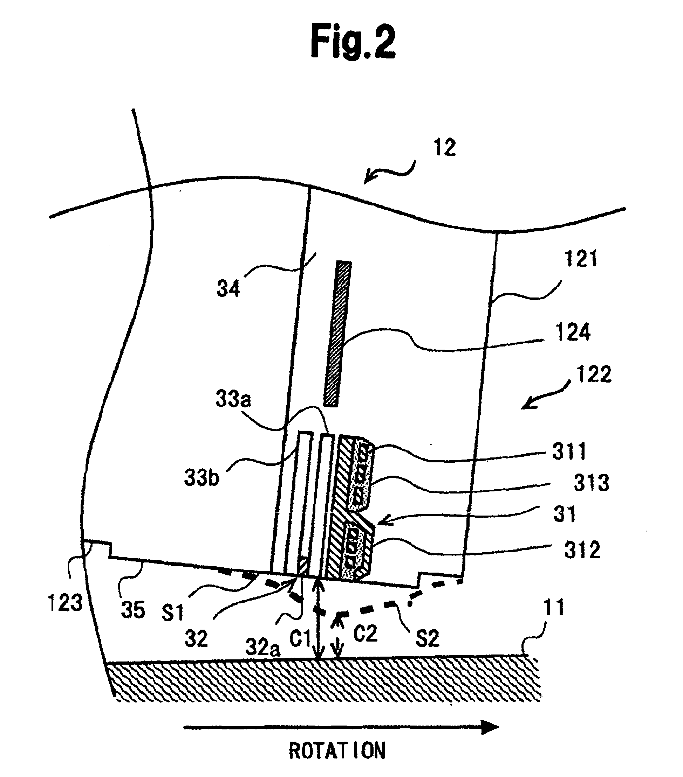

Each of the head sliders 12 according to the present embodiment comprises a heater for the TFC to make the head element portion expand and protrude by heat and adjust the clearance (fly-height) between the head element portion and the magnetic disk 11. The structure of the head slider 12 will be described later in detail referring to FIG. 2. Each of the head slider 12 is fixed to a tip end of an actuator 16. The actuator 16, which is coupled to a voice coil motor (VCM) 15, pivots about a pivotal shaft to move the head sliders 12 above the rotating magnetic disk 11 in its radial direction. The actuator 16 and the VCM 15 are moving mechanisms of the head sliders 12.

On a circuit board 20 fixed outside the enclosure 10, circuit elements are mounted. A motor driver unit 22 drives the SPM 14 and the VCM 15 in accordance with control data from an HDC/MPU 23. A RAM 24 functions as a buffer for temporarily storing read data and write data. An arm electronics (AE) 13 inside the enclosure 10 selects a head slider 12 to access the magnetic disk 11 from multiple head sliders 12, amplifies reproduction signals therefrom to send them to a read-write channel (RW channel) 21. Further, it sends recording signals from the RW channel 21 to the selected head slider 12. The AE 13 further supplies the heater of the selected head slider 12 with electric power and functions as an adjusting circuit for adjusting the electric energy.

The RW channel 21, in read operation, amplifies read signals supplied from the AE 13 to have specific amplitudes, extracts data from the obtained read signals, and performs a decoding process. The retrieved data includes user data and servo data. The decoded read user data and servo data are supplied to the HDC/MPU 23. The RW channel 21, in write operation, code-modulates write data supplied from the HDC/MPU 23, converts the code-modulated data into write signals, and then supplies them to the AE 13.

The HDC/MPU 23, an example of a controller, performs entire control of the HDD 1 in addition to necessary processes concerning data processing such as read/write operation control, command execution order management, positioning control of the head sliders 12 using servo signals (servo control), interface control to and from a host 51, defect management, and error handling operations when any error has occurred. In particular, the HDC/MPU 23 according to the present embodiment performs TFC in accordance with the temperature sensed by a temperature sensor 17 and performs further TFC in accordance with the pressure. Besides, the HDC/MPU 23 checks for head-disk contact when a variation in pressure determined by operational parameters is large. These points will be described later.

FIG. 2 is a cross-sectional view schematically illustrating a configuration in the vicinity of an air flowing end surface (trailing side end surface) 121 of a head slider 12. A slider 123 supports a head element portion 122. The head element portion 122 comprises a read element 32 and a write element 31. The write element 31 generates magnetic fields between magnetic poles 312 by means of electric current flowing across a write coil 311 to write magnetic data onto the magnetic disk 11. The read element 32 has a magnetoresistive element 32a having magnetic anisotropy and retrieves magnetic data by means of resistance varying with magnetic fields from the magnetic disk 11.

The head element portion 122 is formed on an AlTiC substrate constituting the slider 123 by a thin film deposition process. The magnetoresistive element 32a is sandwiched between magnetic shields 33a and 33b. The write coil 311 is surrounded by an insulating film 313. A protective film 34 made of alumina or the like is formed around the write element 31 and the read element 32. A heater 124 is present in the vicinity of the write element 31 and the read element 32, The heater 124 can be formed by winding a thin film resistive element using permalloy or the like and filling the gap with alumina.

When the AE 13 supplies the heater 124 with electric power, the vicinity of the head element portion 122 is deformed to protrude due to the heat of the heater 124. For example, in non-heating, the shape of the ABS 35 of the head slider 12 is indicated by S1 and the clearance which is a distance between the head element portion 122 and the magnetic disk is indicated by C1. The protruding shape S2 in heating the heater 124 is indicated by a dashed line. The head element portion 122 comes close to the magnetic disk 11 and the clearance C2 at this time is smaller than the clearance C1. FIG. 2 is a conceptual view and its dimensions are not rigidly defined. The protruding amount of the head element portion 122 and the clearance vary in accordance with the heater power value supplied to the heater 124.

Hereinafter, TFC and check for head-disk contact according to the present embodiment will be described in detail. As described above, the HDC/MPU 23 of the present embodiment performs TFC for the temperature and the pressure. Heater power P to be applied to the heater 124 is expressed by the sum $(P(t) + P(p))$ of a heater power $P(t)$ depending on the temperature and a heater power $P(p)$ depending on the pressure. A constant term can be incorporated in any formula and the coefficients in formulae can be varied in accordance with environmental conditions such as temperature, pressure, and the like, the head slider 12, or its radial position. Specifically, the heater power P is expressed by the following formula:

$$a. \quad P=(TDP \times eff[DEFAULT]\text{-}Target\text{-}dt \times t\_comp\text{-}dp \times p\_comp)/eff.$$

In the above formula, eff represents heater power efficiency which varies in accordance with the pressure and the radial position; eff[DEFAULT] represents the heater power efficiency under default conditions. TOP represents the heater power at which a head slider 12 contacts a magnetic disk 11 1 under the default conditions; Target, a target clearance; dt, the variation in temperature from the default condition; t_comp, a clearance variation rate for the temperature; dp, the variation in pressure from the default condition; and p_comp, a clearance variation rate for the pressure. The signs of t_comp and p_comp are inversed. TDP, t_comp, and p_comp typically vary depending on the radial position. Typically, the default conditions are environmental conditions of 30°C (the room temperature) and 1 atom (the altitude of 0 m).

The HDC/MPU 23 controls the heater power P in accordance with the temperature sensed by a temperature sensor 17. Specifically, the HDD 1 has data indicating the relationship between the sensed temperatures and the heater powers, and the HDC/MPU 23 determines a heater power depending on the temperature in accordance with the data and the sensed temperature. The relationship between the temperatures and the heater powers depends on the head slider 12, the radial position (or the zone) on a magnetic disk 11, and the pressure.

The HDD 1 of the present embodiment does not have a barometric sensor so that it cannot directly measure the pressure. Therefore, the HDC/MPU 23 measures the clearance to perform the TFC for the pressure. The clearance varies with pressure. Accordingly, the HDC/MPU 23 measures the clearance to determine the variation in pressure dp from the clearance variation. Since the clearance also varies with temperature, the HDC/MPU 23 corrects the measured clearance with the clearance variation induced by the temperature change to determine the clearance variation induced by the pressure change. As described above, defining the default conditions at a specific default temperature and pressure and the default clearance under the default conditions relates the variation of each value to the current value thereof.

The clearance variation after the temperature compensation indicates the variation in pressure. The HDC/MPU 23 controls the heater power P in accordance with the pressure (variation in pressure) determined by the clearance variation. Specifically, the HDD 1 has preset data indicating the relationship between the variation in pressure indicated by clearance variations and the heater powers; the HDC/MPU 23 determines the heater power for the pressure in accordance with the data and the measured pressure.

The HDD1 of the present embodiment determines a clearance or a clearance variation from the default clearance from read signals of the head slider 12. More specifically, it determines a clearance from resolution (resolution in frequency components) of read signals. For example, resolution can be expressed by the ratio between a specific low-frequency signal and a high-frequency signal in a read signal. There are some operational parameters to determine a variation in pressure or a clearance variation induced by a pressure change; the determination of a clearance variation using resolution is one of the most accurate methods. As the clearance decreases, the amplitude of the high-frequency component in a read signal increases to increase signal resolving power, namely, resolution.

The resolution and the clearance have a linear relationship; the clearance can be expressed by a linear function of the resolution after applying an appropriate linear transformation to the resolution. Typically, the linear functions relating the resolution to the clearance are different in each head slider 12. The relationship between the resolution and the clearance for each head slider 12 is determined in a test step in manufacturing the HDD 1 and control parameters in accordance with the relationship are registered in the HDD 1.

The HDC/MPU 23 can determine the resolution by analyzing read signals and calculating the ratio between the high-frequency signal gain (amplitude) and the low-frequency signal gain (amplitude). However, the HDC/MPU 23 requires an additional function in addition to functions necessary for normal operations in order to execute the process. Besides, it takes much process time for the MPU to perform the process. Therefore, it is preferable to measure the resolution using functions implemented in the HDD 1. An RW channel 21 has a function to modulate reproduction waveforms of read signals to accurately extract data from read signals. The RW channel 21 performs the waveform shaping using digital filters.

Among digital filters mounted on the RW channel 21, a digital filter (adaptive cosign filter) to correct the frequency components in reproduction signals has been known. The RW channel 21 corrects the tap value for this filter from the measured results of read signals. This correction value has a first-order relationship with the clearance (resolution) and expresses resolution. This digital filter is a known technique as disclosed in Japanese Unexamined Patent Application Publication No. 5-81807 and U.S. Patent No. 5,168,413; detailed descriptions thereon will be omitted in the present specification. The HDC/MPU 23 can determine the clearance variation by referring to the correction value. Hereinafter, this correction value is called Kgrad. A test step in manufacturing the HDD 1 determines the relationship between Kgrad and the clearance for each head slider 12.

In the following description, the HDC/MPU 23 determines the clearance (clearance variation) by referring to Kgrad, one of the channel parameters, but the HDC/MPU 23 may use other channel parameters indicating the resolution. For example, if the RW channel 21 has a digital filter to restore a specific pattern of reproduction signals into a standard pattern, the HDC/MPU 23 may use a correction value of a resolution component in correction coefficients for taps in the digital filter to determine the clearance.

As described above, the test step in manufacturing the HDD 1 determines the relationship between the heater power and the clearance, the relationship between the temperature and the clearance, and the relationship between Kgrad after a temperature compensation and the clearance and registers data indicating these relationships in the HDD 1. Kgrad varies depending on change of characteristics of the RW channel 21 induced by a temperature change as well as the clearance variation induced by a temperature change. The temperature compensation by Kgrad is performed for these changes together. The HDC/MPU 23 uses these preset data to determine an appropriate heater power value from the temperature sensed by the temperature sensor 17 and the measured value of Kgrad.

The HDC/MPU 23 can obtain Kgrad from the RW channel 21 at an arbitrary timing. However, the pressure does not change during operation like the temperature; typically the pressure is constant after a start-up. Therefore, the HDC/MPU 23 according to the present embodiment controls heater power in accordance with temperature changes after a start-up, but measures the pressure (Kgrad) only in the initial setting operation (power-on reset (POR) operation) at the start-up and performs TFC assuming that the pressure during the operation is the same as the one at the start-up. Note that the HDC/MPU 23 may measure the pressure during operation after the POR to control the heater power in accordance with the changes.

A feature of the present embodiment is to check for head-disk contact if the measured variation in pressure is large. As described above, the HDC/MPU 23 determines the variation in pressure (clearance variation indicating the variation in pressure) from Kgrad and the temperature sensed by the temperature sensor 17 in a POR operation. If the variation in pressure from the default pressure is not within criteria, the HDC/MPU 23 checks for head-disk contact. Measurement of the variation in pressure using Kgrad is not as accurate or stable as the one using a sensor. Accordingly, if the variation in Kgrad is large, confirming the measured result increases the reliability in the following read/write operation. In particular, if the pressure is measured only at the POR, the margin for the possible following pressure change is important. Checking for head-disk contact if the variation in pressure exceeds the criteria can prevent increase in unnecessary operation time due to the check.

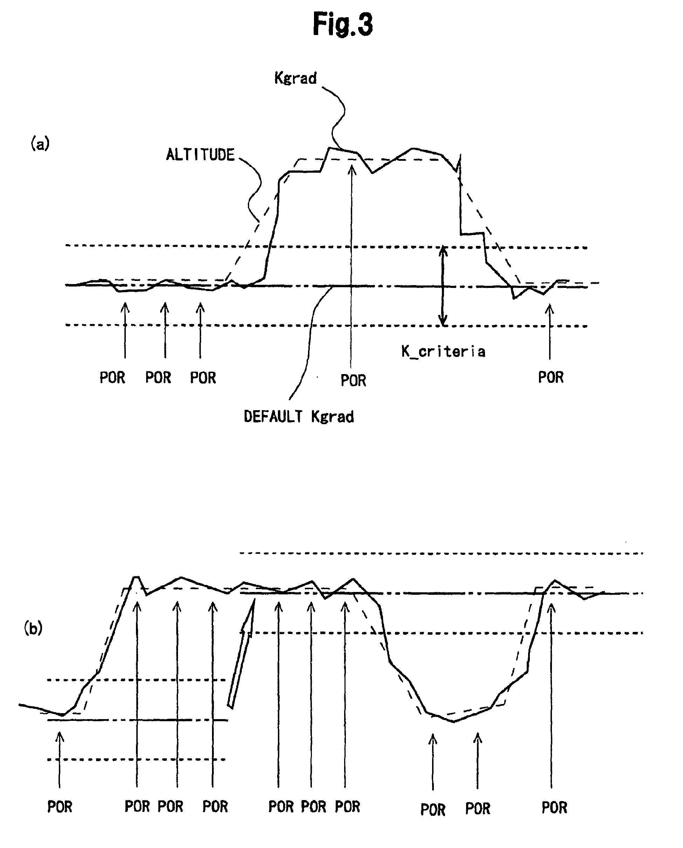

FIG. 3(a) is a diagram schematically illustrating the relationship between the measured results of altitude change (pressure change) and the check for head-disk contact. As the altitude increases, the pressure decreases. FIG. 3(a) shows the altitude, measured values of Kgrad, a default Kgrad, and a reference range K_criteria to determine whether or not to check for head-disk contact. The shown Kgrad are the values after temperature compensations. As described above, the default Kgrad is the value determined in the test step (TEST). As exemplified in FIG. 3(a), Kgrad does not completely follow the altitude (pressure).

At the first three PORs, the altitude and the measured Kgrad are within the reference range K-criteria. Therefore, the HDC/MPU 23 does not check for head-disk contact. At the fourth POR, the altitude A and the measured Kgrad are over the reference range K_criteria. The HDC/MPU 23 checks for head-disk contact at this POR. Then, at the fifth POR, the altitude A and the measured Kgrad are within the reference range K_criteria. Therefore, the HDC/MPU 23 does not check for head-disk contact.

As shown in FIG. 3(a), it is preferable that the reference range K_criteria have thresholds above and below the default Kgrad. Although a typical default altitude is 0 m above sea level, the actual use environment may be under a pressurized condition or at below sea level altitudes. However, check for head-disk contact may be performed only if the altitude increases over the threshold depending on the design.

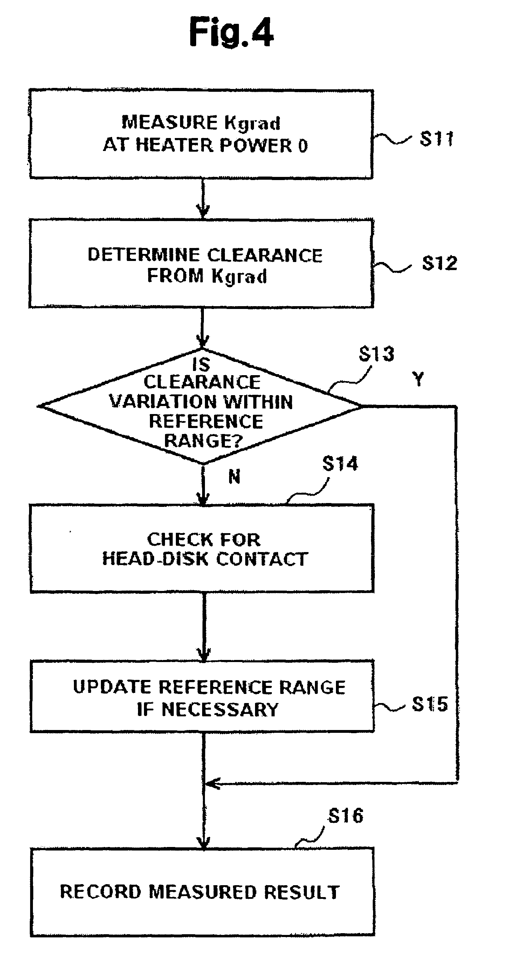

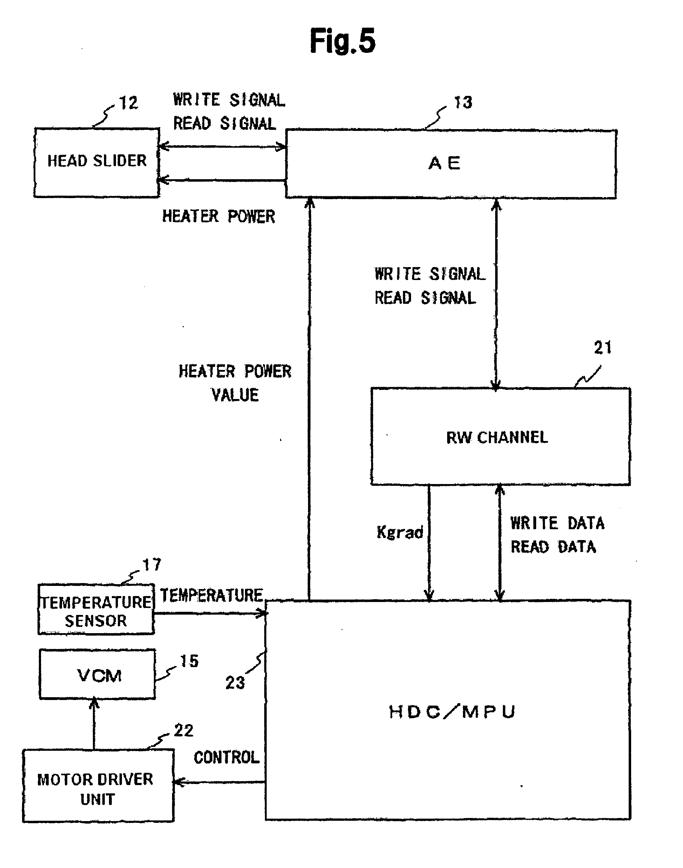

Now referring to the flowchart of FIG. 4 and the block diagram of FIG. 5, processes of pressure measurement and check for head-disk contact according to the present embodiment will be described. The HDC/MPU 23 measures the pressure in a POR operation. The HDC/MPU 23 first measures Kgrad at the heater power of zero (S11). Specifically, the HDC/MPU 23 selects a head slider 12 and controls a VCM 15 through a motor driver unit 22 to move the head slider 12 to a specific data track.

The head slider 12 retrieves data at the accessed address under control of the HDC/MPU 23. The RW channel 21 calculates Kgrad from read signals of the head slider 12 and stores it in a register in the RW channel 21. The HDC/MPU 23 accesses the register in the RW channel 21 and obtains Kgrad. Preferably, the measurement of Kgrad is performed at a plurality of times to calculate the value to determine a clearance from the plurality of measured values. In a preferred example, the HDC/MPU 23 uses the average of the plurality of measured values. Since the measured values of Kgrad include variation in each measurement even under the same conditions (pressure and temperature), determining a clearance from the plurality of measured results achieves determination of a more precise clearance.

It is preferable that the data track to be used in measuring Kgrad have excellent characteristics for the measurement of Kgrad. Therefore, it is preferable that the data track be present in an area which is not used for recording user data or is not accessed by a host 51. This eliminates degradation in characteristics of the data track caused by repetitive overwrite. In an HDD having a ramp outside of a magnetic disk 11, it is preferable that the data track be present inner than the innermost end of the user area because a head slider 12 does not pass the area in normal operation.

Next, the HDC/MPU 23 determines a clearance from Kgrad (S12). Specifically, it determines the clearance variation from the default clearance from the difference between Kgrad measured under default conditions (for example, 30°C, 1 atom) and the measured Kgrad. The clearance variation can be expressed by a heater power value, for example. The default Kgrad is a value after a temperature compensation and the HDC/MPU 23 corrects the measured Kgrad value for the temperature in accordance with the sensed temperature in the same manner. The HDC/MPU 23 compares the temperature corrected default Kgrad with the measured value to determine the variation in pressure from the default pressure (for example, 1 atom) from Kgrad.

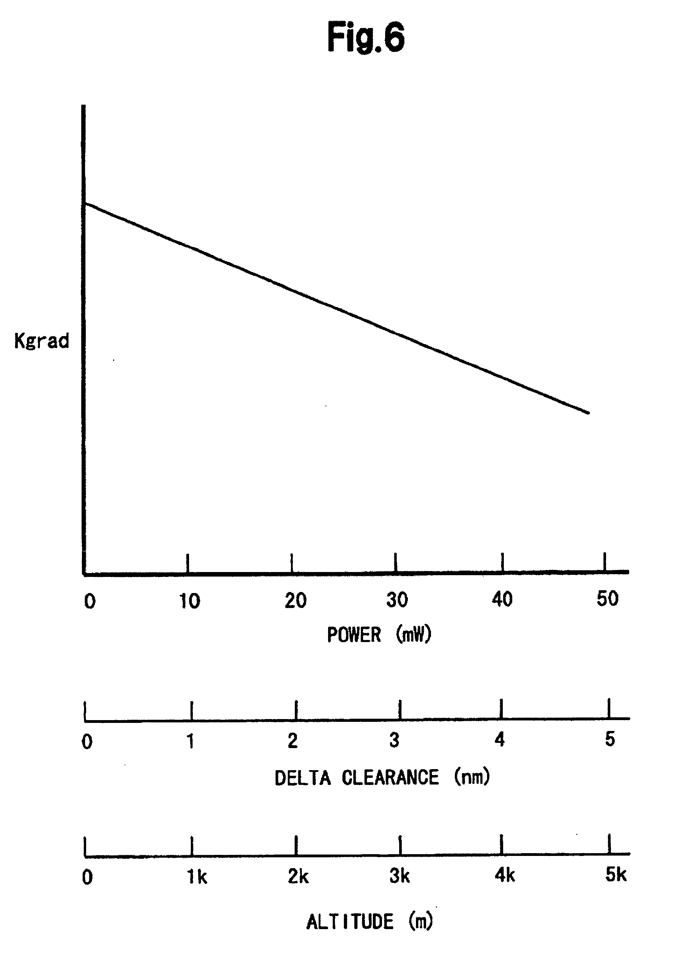

FIG. 6 schematically illustrates the relationship between Kgrad and the clearance, the heater power, and the pressure (altitude). Kgrad are values after temperature compensations. As shown in FIG. 6, the above listed values have a linear relationship with each other. Accordingly, the HDC/MPU 23 can directly determine any value in the aboves from another so that one value can express another value.

The above process measures Kgrad at the heater power zero and corrects the value with the sensed temperature. However, Kgrad may be measured while applying the heater power value corresponding to the default setting for the TFC, the sensed temperature, and the radial position to a heater 124. The value obtained after correcting the measured Kgrad with respect to the temperature change of channel characteristics indicates the variation in Kgrad corresponding to the variation in pressure. In this way, temperature compensation of Kgrad can be performed only by calculation or by clearance adjustment by the TFC.

Next, the HDC/MPU 23 determines whether or not the clearance variation determined from Kgrd is within the reference range (S13). A clearance variation can be expressed by heater power values, nanometers, or Kgrad, for example. The HDC/MPU 23 compares the measured clearance variation with one or two thresholds in the reference range and if the clearance variation is within the reference range (Y in S13), the HDC/MPU 23 records the measured result (S16) without checking for head-disk contact to end the pressure measurement.

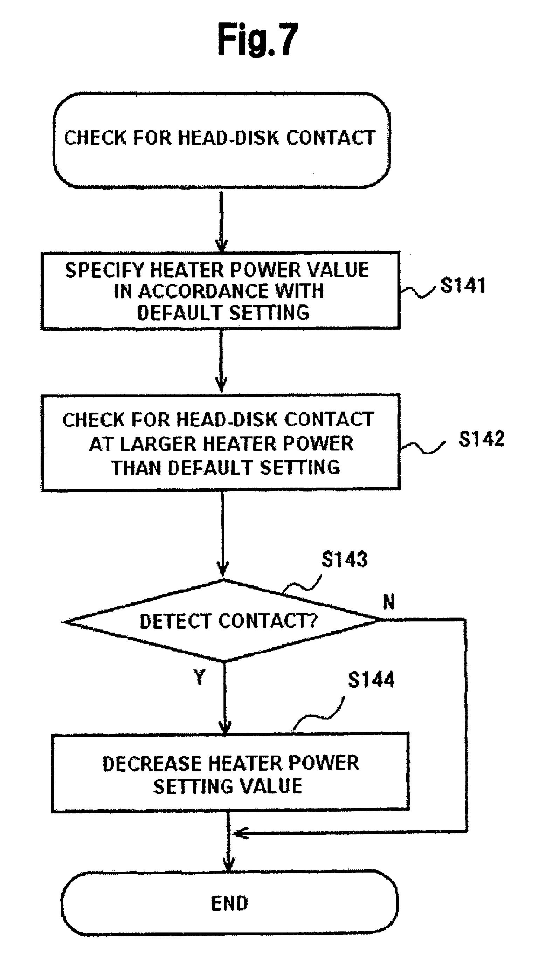

If the measured clearance variation is over the reference range (N in S13), the HDC/MPU 23 checks for head-disk contact (S14). The check for head-disk contact according to the present embodiment will be described referring to the flowchart of FIG. 7. The HDC/MPU 23 specifies the heater power value in a read/write operation in accordance with the default setting in the TFC from the temperature sensed by the temperature sensor 17 and the measured Kgrad (S141). The HDC/MPU 23 specifies the default heater power value for the sensed temperature and Kgrad from control data such as preliminarily registered functions and tables.

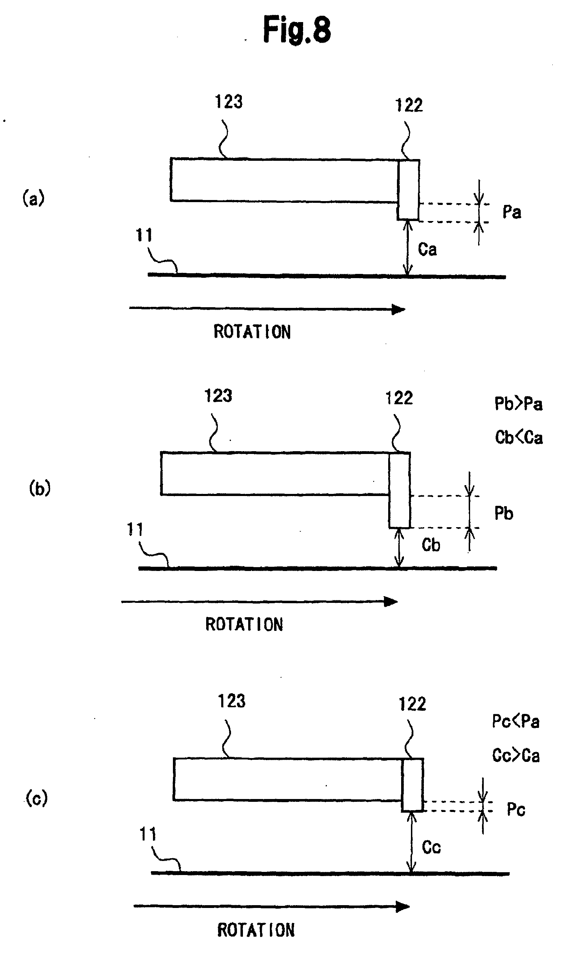

The HDC/MPU 23 checks for head-disk contact at a larger heater power value than the default heater power value (S142). FIG. 8(a) schematically illustrates a head slider 12 at the default heater power value Pa; FIG. 8(b) schematically illustrates a head slider 12 at a heater power value Pb for checking for head-disk contact. In the check for head-disk contact, a head element portion 122 protrudes more than the default state (Pb > Pa), and the clearance Cb is smaller than the default clearance Ca (Cb < Ca). Confirming whether or not contact is detected with a smaller clearance than the default results in proper determination whether or not a requisite clearance margin is present.

First, the HDC/MPU 23 controls an actuator 16 to move a head slider 12 selected for measurement of Kgrad (or another head slider 12) to a specific data track. The HDC/MPU 23 stores data indicating a heater power value larger than the heater power value in the default TFC setting into a register of an AE 13. The AE supplies the heater power corresponding to the data to the head slider 12. The HDC/MPU 23 controls the AE 13 to access a specific data sector with the head slider 12. The access may be either read or write, but typically the HDC/MPU 23 performs a read operation at a specific data sector. It is preferable that the data sector to be used in checking for head-disk contact be in the area which a host 51 will not access. This is because checking for contact in the area which is not a storage area of user data or servo data to be accessed by the host prevents the data area from being damaged.

If the HDC/MPU 23 has not detected contact between a head slider 12 and a magnetic disk 11 (N in S143), the HDC/MPU 23 does not correct the default heater power setting value to finish the check for head-disk contact. Some methods for checking for head-disk contact have been known. For example, the HDC/MPU 23 can check for head-disk contact by measuring amplitudes of read signals, VCM current values, SPM current values, or the like. If contact between the head slider 12 and the magnetic disk 11 has been detected (Y in S143), the HDC/MPU 23 decreases the heater power setting value in a read/write operation to be smaller than the default set value (S144). FIG. 8(c) schematically illustrates a head slider 12 at a heater power value Pc smaller than the default set value Pa. Under the same environment and operational conditions, the corrected heater power value Pc is smaller than the default heater power value Pa and the corrected clearance Cc is larger than the default clearance Ca.

In a preferred example, the decreased amount in the heater power value from the default value is the same as the increased amount in the heater power value in the check for contact. This efficient process can ascertains whether or not a requisite clearance margin is present and can securely attain the requisite clearance margin by the calibration of the heater power value if it is not present. Since the HDD 1 of the present example measures the pressure only at the time of start-up, the heater power values in the following read/write operations at each temperature become smaller than the default settings preset by the above decreased amount in the heater power value.

As described above, it is preferable to check for head-disk contact at a specific clearance. Although it is possible to check for head-disk contact with varying the clearance, that increases the time for the check. In order to decrease the process time, it is preferable to check for head-disk contact only at a specific clearance. Even check at an only clearance can achieve sufficient reliability.

When the check for head-disk contact (S14) ends, the HDC/MPU 23, in the S15, updates the reference range for determining whether or not to check for head-disk contact (S13). If the HDD 1 is always used at high altitude (low pressure), check for head-disk contact is performed at every POR, which significantly increases the process time in PORs. Further, if check for head-disk contact is performed at a clearance smaller than the clearance of the default TFC setting as described above, the possibility of contact increases, so that damage onto the head slider 12 may increase. Updating the reference range can reduce the number of requisite check for contact to meet the use environment of the HDD 1.

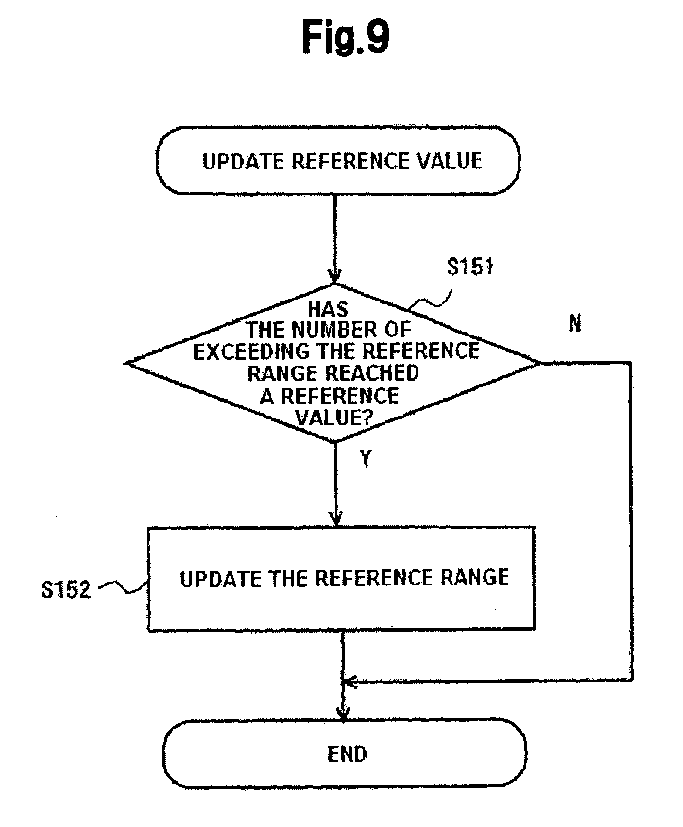

This update process will be described referring to the flowchart of FIG. 9. As shown in the flowchart of FIG. 4, the HDC/MPU 23 records the measured result of variation in pressure (clearance variation) by means of Kgrad (S16). The HDC/MPU 23 refers to the measured results in the past and if the number of decreases in pressure (decreases in clearance) exceeding the reference range has reached a specific value (Y in S151), the HDC/MPU 23 updates the reference range (S152). If the number has not reached the specific value (N in S151), the HDC/MPU 23 does not update the reference range.

In a preferred example, if the number of decreases in pressure (decreases in clearance) exceeding the reference range has reached N in the last M times of PORs, the HDC/MPU 23 updates the reference range. Appropriate natural numbers are selected as M and N in accordance with the design and they may be the same values. The method for updating the reference range updates the default Kgrad only, for example. The values from the default Kgrad to the boundaries of the reference range are the same. In another way, both of the default Kgrad and the boundaries of the reference range may be updated.

FIG. 3(b) is a diagram schematically illustrating the relationship among the measured results of altitude change (variation in pressure), the check for head-disk contact, and the updates of the reference range. The symbols have the same meanings of those in FIG. 3(a). In the example of FIG. 3(b), if Kgrad exceeds the reference range in the last three consecutive PORs, the HDC/MPU 23 updates the default Kgrad to the current Kgrad measured value. In FIG. 3(b), the HDC/MPU 23 updates the default Kgrad at the fifth POR. In this example, the reference range is updated only this time.

In the PORs thereafter, the HDC/MPU 23 determines whether or not to check for contact based on the updated reference range. Although the measured Kgrad values at the eighth and the ninth PORs indicate the values close to the default altitude in the test step, the HDC/MPU 23 checks for head-disk contact since the reference range has already been updated.

As set forth above, the present invention has been described by way of the preferred embodiment but is not limited to the above embodiment. A person skilled in the art can easily modify, add, and convert each element in the above embodiment within the scope of the present invention. The present invention can be applied to a disk drive device having a clearance control mechanism other than the TFC, such as a piezo element. As described above, it is preferable to measure a variation in pressure using read signals, especially resolution, but may be acceptable to measure a variation in pressure using other operational parameters like SPM current. The HDC/MPU 23 may check for head-disk contact at other timings than the PORs. The positions for Kgrad measurement may be any radial positions on a recording surface. The present invention may be applied to an HDD mounting a head slider with only a read element or a disk drive device other than an HDD.

Description of Reference Numerals

1: hard disk drive;
10: enclosure;
11: magnetic disk;
12: head slider;
14: spindle motor;
15: voice coil motor;
16: actuator;
20: circuit board;
21: read-write channel;
22: motor driver unit;
23: hard disk controller/MPU
24: RAM;
31: write element;
32: read element;
32a: magnetoresistive element;
33a, 33b: shields;
34: protective film;
51: host;
121: trailing side end surface;
122: head element portion;
123: slider;
124: heater;
311: write coil;
312: magnetic pole;
313: insulating film

**Claims**

1. A clearance control method in a disk drive device comprising:

   sensing a temperature by a temperature sensor;
   correcting a variation from a default value of an operational parameter in a disk drive device using the sensed temperature to compensate for a variation induced by a temperature change in a variation, and then determining a clearance variation by means of the corrected variation of the operational parameter;
   checking for contact between a head and a disk if the clearance variation exceeds reference range; and
   specifying an adjustment amount for the clearance based on a result of the check for contact.

2. The method according to claim 1, wherein the operational parameter is a parameter which is determined from an amplitude of a signal read from the disk by the head.

3. The method according to claim 1, wherein the operational parameter is a parameter which is determined from a ratio of different frequency components in a signal read from the disk by the head.

4. The method according to claim 1, wherein the clearance at the time of the check for contact is set to be smaller than the clearance in a default setting corresponding to the determined clearance variation.

5. The method according to claim 4, wherein the check for contact is performed at a given adjusted clearance.

6. The method according to claim 5, wherein the check for contact is performed at a given clearance adjusted by the adjustment mechanism.

7. The method according to claim 1, wherein if contact has been detected in the check for contact, a clearance is set to be larger than the clearance in the default setting.

8. The method according to claim 4, wherein if contact has been detected in the check for contact, a clearance is set to be larger than the clearance in the default setting, and the amount of increase from the default setting is the same as the amount of clearance deducted from the default setting in the check for contact.

9. The method according to claim 1, wherein a reference range for the clearance variation for determining whether or not to check for contact based on the number of times that the clearance variation exceeds the reference range.

10. The method according to claim 1, further comprising measuring variation of the operational parameter at a plurality of times and determining whether or not the clearance variation exceeds the reference range based on the plurality of measured results.

11. A disk drive device comprising:

   a head for accessing a disk,
   a moving mechanism for supporting and moving the head above the disk,
   an adjustment mechanism for adjusting a clearance between the head and the disk,
   a temperature sensor, and
   a controller configured to control at least the adjustment mechanism, correcting a variation from a default value of an operational parameter in the disk drive device using a temperature sensed by the temperature sensor to compensate for a variation induced by a temperature change and then determining a clearance variation by means of the corrected variation of the operational parameter, checking for contact between the head and the disk if the clearance variation exceeds a reference range, a specifying an adjustment amount for the clearance based on a result of the check for contact, by carrying out the method of any of the claims 1 to 10.

Fig.1

EP 2 065 888 A1

# Fig.2

ROTATION

# Fig.3

(a)

Kgrad

ALTITUDE

K_criteria

POR   POR   POR   POR   POR

DEFAULT Kgrad

(b)

POR   POR POR   POR   POR POR POR   POR   POR   POR

# Fig.4

```
┌─────────────────────────┐
│    MEASURE Kgrad         │  ～ S11
│  AT HEATER POWER 0       │
└─────────────────────────┘
            │
            ▼
┌─────────────────────────┐
│  DETERMINE CLEARANCE     │  ～ S12
│     FROM Kgrad           │
└─────────────────────────┘
            │
            ▼
         ◇ IS
       CLEARANCE           S13      Y
    VARIATION WITHIN
       REFERENCE
        RANGE?
            │ N        S14
            ▼
┌─────────────────────────┐
│     CHECK FOR            │
│  HEAD-DISK CONTACT       │
└─────────────────────────┘
            │
            ▼
┌─────────────────────────┐
│  UPDATE REFERENCE RANGE  │  ～ S15
│     IF NECESSARY         │
└─────────────────────────┘
            │
            ▼
                         S16
┌─────────────────────────┐
│  RECORD MEASURED RESULT  │
└─────────────────────────┘
```

# Fig.5

HEAD SLIDER 12

WRITE SIGNAL
READ SIGNAL

A E 13

HEATER POWER

WRITE SIGNAL
READ SIGNAL

RW CHANNEL 21

HEATER POWER
VALUE

Kgrad

WRITE DATA
READ DATA

TEMPERATURE
SENSOR 17

TEMPERATURE

VCM 15

23

22

MOTOR DRIVER
UNIT

CONTROL

HDC/MPU

# Fig.6

# Fig.7

```
        ┌─────────────────────────────┐
        │  CHECK FOR HEAD-DISK CONTACT │
        └─────────────────────────────┘
                       │
                       ▼
        ┌─────────────────────────────┐
        │   SPECIFY HEATER POWER VALUE │         S141
        │     IN ACCORDANCE WITH       │
        │      DEFAULT SETTING         │
        └─────────────────────────────┘
                       │
                       ▼
        ┌─────────────────────────────┐
        │  CHECK FOR HEAD-DISK CONTACT │         S142
        │   AT LARGER HEATER POWER     │
        │    THAN DEFAULT SETTING      │
        └─────────────────────────────┘
                       │
                       ▼        S143
                    ╱──────────╲              N
                 ╱  DETECT CONTACT? ╲──────────┐
                    ╲──────────╱               │
                       │ Y           S144      │
                       ▼                       │
        ┌─────────────────────────────┐        │
        │   DECREASE HEATER POWER      │        │
        │      SETTING VALUE           │        │
        └─────────────────────────────┘        │
                       │◄──────────────────────┘
                       ▼
        ┌─────────────────────────────┐
        │           END               │
        └─────────────────────────────┘
```

# Fig.8

(a)

123   122

Pa

Ca

11

ROTATION

(b)

123   122   Pb>Pa

Cb<Ca

Pb

Cb

11

ROTATION

(c)

123   122   Pc<Pa

Cc>Ca

Pc

Cc

11

ROTATION

# Fig.9

UPDATE REFERENCE VALUE

S151

HAS
THE NUMBER OF
EXCEEDING THE REFERENCE
RANGE REACHED
A REFERENCE
VALUE?

N

Y

S152

UPDATE THE REFERENCE RANGE

END

Europäisches
Patentamt

European
Patent Office

Office européen
des brevets

# EUROPEAN SEARCH REPORT

Application Number

EP 08 01 8003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/024775 A1 (KURITA MASAYUKI [JP] ET AL) 3 February 2005 (2005-02-03) * paragraphs [0076], [0079] - [0085]; figures 8,9 * | 1,2,4-11 | INV. G11B5/60 |
| Y | | 3 | |
| Y | EP 1 840 880 A (FUJITSU LTD [JP]) 3 October 2007 (2007-10-03) * paragraphs [0008] - [0016], [0028], [0091]; figures 1A,5-9,14a,14b * | 1-11 | |
| Y | US 2007/236821 A1 (MA YIPING [US] ET AL) 11 October 2007 (2007-10-11) * paragraphs [0002] - [0007], [0023]; figures 2,3 * | 1-11 | |
| X | US 2006/007594 A1 (UMEHARA TSUYOSHI [JP] ET AL) 12 January 2006 (2006-01-12) * paragraphs [0045], [0046], [0117], [0118] * | 1,9-11 | |

TECHNICAL FIELDS
SEARCHED     (IPC)

G11B

The present search report has been drawn up for all claims

| Place of search | Date of completion of the search | Examiner |
|---|---|---|
| The Hague | 10 December 2008 | Rutsch, Gerald |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 01 8003

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2008

| Patent document cited in search report | | Publication date | Patent family member(s) | | Publication date |
|---|---|---|---|---|---|
| US 2005024775 | A1 | 03-02-2005 | CN | 1581297 A | 16-02-2005 |
| | | | JP | 4072469 B2 | 09-04-2008 |
| | | | JP | 2005056447 A | 03-03-2005 |
| EP 1840880 | A | 03-10-2007 | JP | 2007265516 A | 11-10-2007 |
| | | | KR | 20070097287 A | 04-10-2007 |
| | | | US | 2007230014 A1 | 04-10-2007 |
| US 2007236821 | A1 | 11-10-2007 | NONE | | |
| US 2006007594 | A1 | 12-01-2006 | CN | 1719522 A | 11-01-2006 |
| | | | JP | 2006024289 A | 26-01-2006 |

EPO FORM P0459

For more details about this annex : see Official Journal of the European Patent Office, No. 12/82

**EP 2 065 888 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006190454 A
- JP 2006092709 A
- JP 5081807 A
- US 5168413 A